# EUROPEAN PATENT APPLICATION

(11) **EP 3 988 503 A1**
(43) Date of publication of application: **27.04.2022**
(21) Application number: 20203375.9
(22) Date of filing: 22.10.2020
(51) Int. Cl.: C01B 17/24, C01D 5/08, C01F 11/46, C01G 9/08

(54) **METHOD FOR PREPARING ZINC SULFIDE**

(71) Applicant: Venator Germany GmbH, 47198 Duisburg (DE)
(72) Inventor: Rohe, Markus, 47445 Moers (DE); Chmielewski, Christoph, 45276 Essen (DE)
(74) Representative: Nobbe, Matthias

(57) **Abstract**

The present invention relates to a method for preparing zinc sulfide as a couple product of a barium sulfate production. In particular, the present invention relates to zinc sulfide production which is decoupled from the barium sulfate production.

## Description

The present invention relates to a method for preparing zinc sulfide as a couple product of a barium sulfate production. In particular, the present invention relates to zinc sulfide production which is decoupled from the barium sulfate production.

In the prior art, processes for producing barium sulfate and zinc sulfide are known. For example, CN101205077A discloses a method for producing barium sulfate and zinc sulfide on the basis of a black ash raw material containing more than 50% barium sulfide obtained by calcining a mixture of barytes and coal in the first step, wherein the reaction mixture is leached to afford a clarified barium sulfide solution; 2) the above barium sulfide solution reacts with mirabilite (Na₂SO₄) to provide barium sulfate product after pressure-filtration separation followed by drying and grinding; 3) preparing a zinc sulfate solution; and 4) reacting the zinc sulfate solution with a sodium sulfide solution obtained from step 2) followed by separating the ZnS precipitate by pressure filtration; 5) the Na₂SO₄-solution mother liquor obtained from step 4) is concentrated in the boiler, wherein the hot stream is fed back to the system to heat the water for leaching the barium sulfide, while the concentrated Na₂SO₄-solution is used for reaction with the BaS.

CN103288123A is directed to a closed loop method for the preparation of fine zinc sulfide, in which the ZnO solid powder is mixed with H₂SO₄ solution to obtain ZnSO₄ solution with impurity, and the ZnSO₄ solution with impurity is purified to obtain a solution of pure ZnSO₄. Said solution of pure ZnSO₄ is reacted with a solution of Na₂S, whereby the resulting zinc sulfide is separated by filtration, dried, calcined and highly crushed to provide fine ZnS product.

CN104326499A discloses a method of increasing the concentration of a sodium sulfide solution for zinc sulfide production formed during the process of producing BaSO₄, wherein the concentration of the sodium sulfide solution is increased through three times of extraction of the Na₂S in the black ash, so as to reduce the evaporation cost of producing 60 alkali (Na₂S flakes having a content of sodium sulfide of at least 60%).

CN106976900A discloses a method for preparation of barium sulfate for powder coatings. The method employs the reaction of barium sulfide obtained by calcining the barytes and a solution of sodium sulfate which is free of calcium and magnesium.

The above methods of producing zinc sulfide use either sodium sulfide derived from the reaction of BaS and Na₂SO₄ or directly use the commercial available Na₂S. In case of using the commercial available Na₂S, a solution of the Na₂S is reacted with a solution of ZnSO₄. However, direct use of the commercially available Na₂S is not attractive from the economic point of view due to the high cost and the precautions to be taken in view of the toxicity of the Na₂S. For example, the Na₂S flakes fall under the Seveso III Directive 2012/18/EUwith limited capacity and special safety requirements. Furthermore, solid Na₂S is not easy to handle due to formation of dust and extra separated encased dissolving station.

The other option is to purchase a solution of Na₂S. The ideal concentration of aqueous solution of Na₂S is 12%, otherwise it will crystallize upon increasing the concentration or decreasing the temperature of the Na₂S solution. Also the safety classification will change. Thus, the costs for the material will be increased due to purchase of the material from a supplier and due to additional logistic needs as well as potential costs for restructuring the production plant so that this option is not cost-effective from the economic point of view.

Therefore, there is a need of producing ZnS under conditions which are improved with respect to the use of Na₂S and which overcome the afore-mentioned deficiencies in the prior art.

The problem underlying the present invention is solved by the provision of the process according to the present invention.

Thus, the present invention is directed to a process for producing zinc sulphide comprising the steps of
a) preparing a mixture of barium sulfate, preferably baryte, and an alkali metal sulfate, preferably sodium sulfate;
b) treating the mixture obtained in step a) in the presence of one or more reducing agents in a temperature range of 700 °C to 1250 °C under a non-oxidizing atmosphere in a reactor;
c) treating the product resulting from step b) with water and filtering the obtained solution whereby a filtrate is obtained;
d) adding an aqueous solution of an alkali metal sulfate to the filtrate of step c), preferably in an at least stoichiometric amount of sulfate ions related to the barium ions;
e) filtering the product of step d) whereby the BaSO₄ precipitate formed in step d) is separated from the filtrate;
f) treating the filtrate of step e) with an aqueous solution of a Zn²⁺ compound, in particular ZnSO₄, preferably in an at least stoichiometric amount related to the sulphide ions;
g) filtering the product of step f) whereby the ZnS precipitate formed in step f) is separated from the filtrate.

The process of the present invention can be illustrated in the following equations for sodium sulfate and zinc sulfate as used compounds:

m Baryte + n C → m BaS + n CO₂ (1)

p Na₂SO₄ + r C → p Na₂S + r CO₂ (2)

BaS + Na₂SO₄ → BaSO₄ + Na₂S (3)

Na₂S + ZnSO₄ → ZnS + Na₂SO₄ (4)

As it can be seen from said equations, stoichiometric amounts of SO₄²⁻ added in step d) and in (3) and of Zn²⁺ added in step f) and in (4) are preferred in order to achieve complete precipitation of BaSO₄ and ZnS, respectively.

In order to facilitate the reaction, the starting materials are used in a particulate form, preferably having a particle size of below 500µm.

Compared to the prior art methods of producing ZnS, the present inventive method is advantageous in that, by the present inventive method, the intermediate product Na₂S/alkali metal sulfide generated in the process of producing BaSO₄ through the reaction of BaS and Na₂SO₄/alkali metal sulfate is completely converted to ZnS on the one hand, and the amount of Na₂S/alkali metal sulfide is not limited to the amount generated by the reaction of BaS and Na₂SO₄, but also can be increased by adding an amount of metal alkali sulfate to the baryte according to step a) followed by calcination/reduction treatment in the presence of a preferably carbonaceous reducing agent according to step b) of the inventive method. Thus, the amount of intermediate product Na₂S, and hence the amount of ZnS can be made independent of the production of BaSO₄.

Before the present invention was made, the production of ZnS is often coupled with the production of BaSO₄. When producing ZnS, an equimolar amount of BaSO₄ is produced. In practice, the weight ratio of the produced BaSO₄ and ZnS is BaSO₄ 2.8:1, i.e., to produce one ton of ZnS 2.8 tons of BaSO₄ are produced simultaneously.

In an embodiment of the method according to the present invention, the reducing agent is selected from the group consisting of carbonaceous reducing agents selected from coal, coke, petroleum coal and liquid natural gas (LNG), Hydrogen, and mixtures thereof. In case of a non-gaseous reducing agent, it can be helpful to have a catalytic amount of oxygen at the beginning of the reaction in the reactor in step b) in order to faster start the reaction. It might also be an option to apply mechanical energy to the reaction mixture in step b) to have a more intimate reaction mixture.

In a further embodiment of the method according to the present invention, the molar ratio of the baryte and alkali metal sulfate in the mixture in step a) of the method is in the range of 2:1 to 50:1, preferably 3:1 to 20:1 more preferably 3:1 to 10:1, most preferred 6:1.

Within the above defined range of BaSO₄:Na₂SO₄/alkali metal sulfate, the ratio of the products ZnS:BaSO₄ can be adjusted in view of the practical need on the one hand, and the production equipment for the calcination/reduction of BaSO₄ can be used for carrying out calcination/reduction of the mixture of BaSO₄ and Na₂SO₄/alkali metal sulfate according to step b) without significant restructuring the equipment, thus providing a cost-effective way of producing ZnS using the available conditions.

According to a further embodiment of the method according to the present invention, the molar ratio of the sulfate compounds of the mixture obtained in step a) to the reducing agent is in the range of 1:35 to 1:10, preferably 1:4 to 1:8. The amount of carbonaceous reducing agents is used in an excessive amount ensuring sufficiently reducing the sulfate-ions to sulfide-ions in step b).

Preferably, the treatment in step b) of the method according to the present invention is carried out at a temperature in the range of 800 - 1250 °C, preferably in the range of 850 - 900 °C.

The selected temperature range ensures the reduction of both BaSO₄ and alkali metal sulfate to sulfide in good yields. Although a temperature as high as 1250 °C may favour the reduction of BaSO₄, said high temperature will reduce the yield of Na₂S significantly.

Furthermore, the reaction in step a) of the method according to the present invention is allowed to proceed within a period of 60 - 180 min, preferably 75 - 150 min, and particularly preferably 90 - 120 min.

According to the present invention, the simultaneous generation of BaS and Na₂S/alkali metal sulfide enables the adjustment of the molar ratio of barium sulfate to zinc sulfide by tuning the ratio of natural baryte to sodium/alkali metal sulfate to be reduced.

Furthermore, the reduction process according to the present invention is advantageous in that it can be carried out using the available production line for producing BaS without necessity to adapt the existing production line specially for the production of Na₂S.

Barium sulfide can be produced by calcination of natural baryte in the presence of one or more reducing agent, preferably one or more carbonaceous reducing agents selected from the group consisting of coal, coke, petroleum coal, liquid natural gas (LNG) and hydrogen or mixtures thereof in a kiln. The temperature is approximately 1100 °C and the yield of BaS is around 90%. After calcination, the BaS melt is directly dissolved in water to generate a BaS solution, which is clarified, cleaned and filtered for use in the white plant for the BaSO₄ production.

Sodium/Alkali metal sulfide can be prepared by the reaction of H₂S and NaOH/alkali metal hydroxide or produced by reduction of Na₂SO₄/alkali metal sulfate with one or more reducing agents, preferably carbonaceous reducing agents, LNG or hydrogen. To produce Na₂S/alkali metal sulfide by the reduction route a new kiln will have to be used and a high concentration of Na₂S has to be handled on the site. This leads to high investment cost and strict safety regulations.

Therefore, the present invention is based on producing both BaS and Na₂S/alkali metal sulfide by using the existing equipment to reduce a mixture of natural baryte and Na₂SO₄/alkali metal sulfate, followed by leaching with water to generate a solution containing both BaS and Na₂S/alkali metal sulfide. The ratio of natural baryte and sodium/alkali metal sulfate can be varied in accordance with the practical need. If the demand of ZnS is higher, the amount of Na₂SO₄/alkali metal sulfate to be added to the natural baryte is raised to form more Na₂S/alkali metal sulfide for the ZnS production. Correspondingly, the proportion of BaS is automatically reduced in the resulting black ash product by adding Na₂SO₄ to the mixture of natural baryte and reducing agent, which is advantageous in case the demand of BaSO₄ is lower. It is clear that an equimolar amount of Na₂S with respect to BaSO₄ will be generated in accordance with the following reaction equation (1) (see Table 1 for specific embodiments).

(1) BaS + Na₂SO₄ → BaSO₄ + Na₂S

(2) Na₂S + ZnSO₄ → ZnS + Na₂SO₄

Before the present invention was made, ZnS and BaSO₄ are produced in a coupled reaction process according to the above reaction equations (1) and (2), and BaSO₄ and ZnS are produced in a molar ratio of 1:1 but in a weight ratio of circa 2.8 : 1. According to the present invention the previous BaSO₄ : ZnS weight ratio can be reduced according to practical need and the ZnS production is decoupled from the BaSO₄ production according to the method as defined in the present invention.

It was found that adding of 10 % by weight of Na₂SO₄ to the baryte, corresponding to a molar ratio of Na₂SO₄ : BaSO₄ of 1: 6, a yield of BaS of 90 % is obtained, which is comparable to process in the state of the art and a yield of Na₂S of 90-95 %.

It is shown that the molar ratio of the alkali sulfate to baryte can also be modified to be in the range of 1:10 to 10:1 and the treatment temperature in step b) is in the range of 700 - 1250 °C, preferably in the range of 800 - 1000°C, particularly preferably in the range of 850 °C and 900 °C.

In principle, the reduction process can be carried out by using carbon from different sources, such as coal, coke, petroleum coal, liquid natural gas, LNG, hydrogen or mixtures thereof.

The quality of the BaSO₄ and ZnS as the final products are comparable to the BaSO₄ and ZnS products prepared by the conventional coupled process.

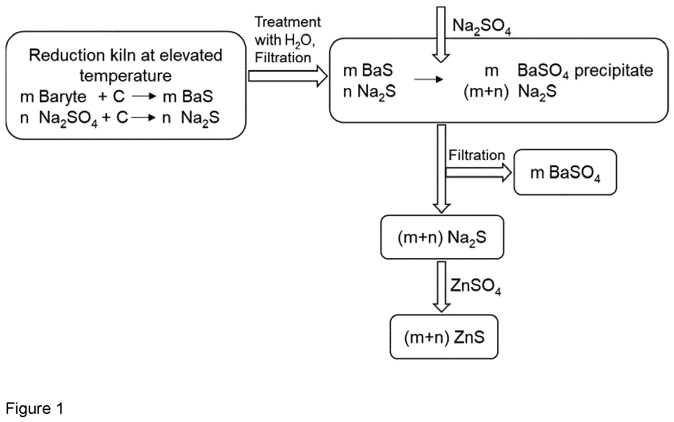

Fig. 1 shows a flowchart of the method according to the present invention.

As shown in Fig. 1, the baryte and sodium sulfate are simultaneous calcined and reduced in the presence of carbonaceous reducing agent, such as petroleum coal at elevated temperature. The reduction temperature in the oven is generally in the range of 700 - 1250°C, preferably in the range of 800 - 1000°C, particularly preferably in the range of 850 °C and 900 °C. The residence time of the mixture in the calcination and reduction step is allowed to proceed within a period of time of 60 - 180 min, preferably of 75 - 150 min, particularly preferable 90 - 120 min.

As shown in Fig. 1, the mixture of m mol of baryte and n mol of Na₂SO₄ are calcined and reduced in the presence of petroleum coal as a reducing agent 01 at elevated temperatures. After reduction with petroleum coal, the reaction mixture can be directly diluted in water to afford an aqueous solution containing m mol of BaS and n mol of Na₂S. Said aqueous solution can then be treated with a solution of sodium sulfate to theoretically form m mol of BaSO₄ precipitate and a solution containing (m+n) mol of Na₂S, wherein m mol of Na₂S are derived from the baryte and n mol of Na₂S are derived from the Na₂SO₄.

The combined aqueous solution of (m+n) mol of Na₂S from both BaSO₄ and Na₂SO₄ are separated from the barium sulfate precipitate in the first filtration step in the White plant. The resulting Na₂S solution can be used for the ZnS production.

By varying the ratios of the feedstocks fed to the reduction kiln can the molar ratio of the BaS to Na₂S, hence the molar ratio of the final products BaSO₄ : ZnS be precisely adjusted. Table 1 shows the different trials with different calcination/reduction temperatures, residence times of calcination/reduction and molar ratios of the barium sulfate to carbon and sodium sulfate to carbon.

| No. | BaSO₄ : C | | Na₂SO₄ : C | | Calcination/ Reduction | | Yield BaS | Yield Na₂S |
|---|---|---|---|---|---|---|---|---|
| | Weight ratio | Molar ratio | Weight ratio | Molar ratio | Temp /°C | Duration /min | % | % |
| 01 | 5:1 | 1:4 | - | - | 1100 | 60 | 73.8 | - |
| 02 | 5:1 | 1:4 | - | - | 1100 | 120 | 89.8 | - |
| 03 | 5:1 | 1:4 | 2:1 | 1:6 | 900 | 90 | 77.7 | 87 |
| 04 | 5:1 | 1:4 | 2:1 | 1:6 | 850 | 120 | 73.8 | 80.6 |
| 05 | 5:1 | 1:4 | 2:1 | 1:6 | 900 | 120 | 83 | 93.5 |
| 06 | 5:1 | 1:4 | 2:1 | 1:6 | 950 | 120 | 86.3 | 71 |
| 07 | 5:1 | 1:4 | 3:1 | 1:4 | 850 | 90 | 75.4 | 81.8 |
| 08 | 5:1 | 1:4 | 3:1 | 1:4 | 900 | 90 | 83.3 | 84.8 |
| 09 | 5:1 | 1:4 | 3:1 | 1:4 | 900 | 120 | 81 | 81 |
| 10 | 5:1 | 1:4 | 3:1 | 1:4 | 950 | 90 | 80.8 | 84.8 |
| 11 | 5:1 | 1:4 | 3:1 | 1:4 | 1000 | 90 | 80.4 | 84.8 |
| 12 | 5:1 | 1:4 | 3:1 | 1:4 | 1100 | 90 | 79.4 | 64 |
| 13 | 5:1 | 1:4 | 3:1 | 1:4 | 900 | 90 | 86 | 90 |

The carbonaceous reducing agent, calculated as carbon, is used in an excessive amount. For instance, the weight ratio of BaSO₄:C of 5:1 for Examples 01-13 corresponds to a molar ratio of BaSO₄:C of 1:4. Given the stoichiometric proportion of BaSO₄:C of 1:2 for a complete reduction of the BaSO₄ to BaS, the amount of C is regularly at least four times as much in view of the stepwise oxidation.

Regarding reduction of Na₂SO₄, the weight ratio of Na₂SO₄:C of 2:1 for Examples 01-06 corresponds to a molar ratio of approximately 1:6, i.e. the amount of carbon is three times as much as needed. For Examples 07-13, the molar ratio of Na₂SO₄:C is approximately 1:4. Thus, the amount of carbon in all examples is used at least in an amount of twice as much as needed.

For the reduction of BaSO₄, the highest yield of 89.8% of BaS is obtained at a calcination/reduction temperature of 1100 °C for 120 min as shown for Example 2. If the calcination/reduction time is reduced to 90 min at 1100 °C, the yield of BaS of reduced to 79.4% as shown in Example 13. With a calcination/reduction of 60 min, the yield of BaS is even decreased to 73.8% at 1100 °C. Thus, the results of Examples 01, 02 and 13 indicate that a longer calcination/reduction time favours a high yield of BaS.

For Examples 7-8 and 10-13, the calcination/reduction time is 90 min, the temperature range is in the range of 850 - 1100 °C, and the highest yield of 86% is obtained at a temperature of 900 °C for Example 13.

Regarding the calcination/reduction of Na₂SO₄, at the calcination/reduction temperature of 1100 °C for Example 12, the yield of Na₂S is merely 64%, which is significantly lower than that at temperature range of 850 - 1000 °C, indicating the temperature range of 850 - 1000 °C is preferable for a good yield of Na₂S. In Examples 04-06, the calcination/reduction time is kept at 120 min and the highest yield of Na₂S of 93.5% is obtained at 900 °C. Reducing the calcination/reduction time from 120 min to 90 min leads to the decreasing of the yield of Na₂S, however, the highest yield is still obtained at a temperature range of 900 - 950 °C for Examples 7 and 9.

Thus, the optimal temperature range for calcination/reduction of both BaSO₄ and Na₂SO₄ is shown to be in the range of 850 - 900 °C.

To implement the invention; a minor investment only is needed for mixing Na₂SO₄ into the mixture used for reducing BaSO₄. There will be no considerable change and investment in other parts of the production line. It is calculated that the cost of external supply of a Na₂S solution is much higher than producing Na₂S according to the present invention.

Furthermore, isolation of the Na₂S is not necessary for the method according to the present invention. Thus, the method according to the present invention minimizes the possibility of handling hazardous Na₂S both in the solution and in the solid form. In addition, the present inventive method has the advantage that the available production instruments for producing BaS can be adjusted with minor change to adapt to the production of BaS and Na₂S, which makes the inventive method particularly attractive in the economic point of view.

## Claims

1. A method for producing zinc sulfide comprising the steps of:
a) preparing a mixture of barium sulfate, preferably baryte, and of alkali metal sulfate, preferably sodium sulfate;
b) treating the mixture obtained in step a) in the presence of one or more reducing agents in a temperature range of 700°C to 1250°C under a non-oxidizing atmosphere;
c) treating the product resulting from step b) with water and filtering the obtained solution whereby a filtrate is obtained;
d) adding an aqueous solution of an alkali metal sulfate to the filtrate of step c), preferably in an at least stoichiometric amount related to the barium ions;
e) filtering the product of step d) whereby the BaSO₄ precipitate formed in step d) is separated from the filtrate;
f) treating the filtrate of step e) with an aqueous solution of a Zn²⁺ compound, in particular ZnSO₄, preferably in an at least stoichiometric amount related to the sulfide ions;
g) filtering the product of step f) whereby the ZnS precipitate formed in step f) is separated from the filtrate.

2. The method according to claim 1, wherein the reducing agent is selected from the group consisting of carbonaceous reducing agents selected from coal, coke, petroleum coal and LNG, hydrogen, and mixtures thereof.

3. The method according to claim 1 or 2 wherein the molar ratio of the baryte and alkali metal sulfate in the mixture in step a) of the method is in the range of 2:1 to 50:1, preferably 3:1 to 20:1 more preferably 3:1 to 10:1, most preferred 6:1.

4. The method according to any one of claims 1 - 3, wherein the molar ratio of the sulfate compounds of the mixture obtained in step a) to the reducing agent is in the range of 1:4 to 1:10 preferably 1:4 to 1:8.

5. The method according to any one of claims 1 - 4, wherein the treatment in step b) is carried out at a temperature in the range of 800 - 1250 °C, preferably in the range of 850 - 1100 °C.

6. The method according to any one of claims 1 - 5, wherein the reaction in step a) is allowed to proceed within a period of time of of 60 - 180 min, preferably 75 - 150 min, and particularly preferable 90 - 120 min.
